# EUROPEAN PATENT SPECIFICATION

(11) **EP 2 260 613 B1**
(45) Date of publication and mention of the grant of the patent: **16.05.2012**
(21) Application number: 08735794.3
(22) Date of filing: 03.04.2008
(51) Int. Cl.: H04L 12/24, G05B 13/02

(54) **BEHAVIOUR MODEL FOR A COMMUNICATIONS NETWORK**
VERHALTENSMODELL FÜR EIN KOMMUNIKATIONSNETZ
MODÈLE DE COMPORTEMENT POUR RÉSEAU DE COMMUNICATIONS

(43) Date of publication of application: 15.12.2010
(73) Proprietor: Telefonaktiebolaget L M Ericsson (PUBL), 164 83 Stockholm (SE)
(72) Inventor: QUINN, Karl, Dublin D14 (IE); MATUSIKOVA, Katarina, Athlone (IE)
(74) Representative: Stasiewski, Piotr Grzegorz
(86) International application number: PCT/EP2008/054053
(87) International publication number: WO 2009/121414

(56) References cited:
- US-A1- 2005 222 811
- US-A1- 2006 206 293
- DA COSTA, P.C.G., LASKEY, K.B.: "PR-OWL: A Framework for Probabilistic Ontologies" INTERNATIONAL CONFERENCE ON FORMAL ONTOLOGY IN INFORMATION SYSTEMS (FOIS 2006), [Online] November 2006 (2006-11), pages 1-12, XP002523354 Baltimore, Maryland (USA) Retrieved from the Internet: URL:http://ite.gmu.edu/~klaskey/papers/FOI S2006_CostaLaskey.pdf> [retrieved on 2009-04-03]

## Description

### TECHNICAL FIELD

The present invention relates to communications network management in general, and in particular to a new type of behaviour model for monitoring and managing events and/or actions occurring in a communications network.

### BACKGROUND

Autonomic network management systems of today are often able to identify patterns of unstable behaviour in communications networks. Such identification is carried out in order to allow for a possibility to influence the choice of management activities to be executed, or to identify unknown correlations of network events. The architecture of such event-based management systems is described in, e.g., "Self-configuration for Radio Access Networks" by J. Baliosian, H. Oliver, A. Devitt, F. Sailhan, E. Salamanca, B. Danev, G. Parr, published in proceedings of the 7th IEEE Workshop on Policies for Distributed Systems and Networks (Policy 2006) June 5-7 2006 , London, Canada.

Events may in this context be the issuance of messages informing about something happening in the network, such as the occurrence of an alarm or a performance parameter increment event, or a service/action request made by one node to itself or to another node. The patterns of system behaviour are captured in one part of the system by using a behaviour model. A behaviour model is designed to monitor the actual events occurring in the network on an on-going basis and to generalise over these individual events to identify patterns of behaviour. Furthermore, given a specification of undesired states, the behaviour model will identify patterns of behaviour which result in undesired states. The behaviour model is further used by the management system or the network operator to decide the future actions.

Conceptually, monitoring network behaviour typically involves two fundamental parts: building of a descriptive model of the network entity (e.g. a service) and its features to be monitored (e.g. events/actions related to that service), and building of a BM that observes said network entity.

Today, description of network entities and their features is sometimes made using ontological engineering. Ontological engineering focuses on how to capture concepts in a given domain with the purpose of sharing a common understanding of this domain and thus enable interoperability and knowledge reuse. Ontologies are taxonomies of concepts and their attributes in a given domain together with formal representation of domain assumptions. Formal in this context means that it is semantically rich based on a well-understood logical paradigm such as Description Logics (DL) or Frame Logics (FL). Formal ontologies are thus based on well-defined semantics enabling machine-readability and reasoning about information through various inference (reasoning) capabilities supported. One program language based on DL and sometimes used to describe network entities and their features using ontologies is OWL (Web Ontology Language). OWL is a semantic modelling language intended to be used when the information contained in documents needs to be processed by applications, as opposed to situations where the content only needs to be presented to humans, and has more facilities for expressing meaning and semantics than XML, RDF, and RDFS, thus going beyond these languages in its ability to represent machine interpretable content on the Web.

That is, OWL or other ontology based modelling languages can be used to build a network-describing model, hereinafter referred to as a network model, in which different events and action requests that may occur in the network are modelled as separate ontology classes. An ontology class additionally comprises attributes associated with the particular event or action request modelled by the ontology class. The term 'ontology class' can be subsumed under the more generic term 'ontology' and, as such, throughout this document, `ontologies' may be used in reference to 'ontology classes'.

When it comes to the building of a model that observes and monitors the network entities and its features, i.e. the building of a network behaviour model, probabilistic graphical models are sometimes used. Probabilistic graphical models provide a means to monitor behaviour by specifying the dependencies (and independencies) that hold between different aspects of a system. A Bayesian network is a particular type of probabilistic graph model that previously has been applied in the domain of fault management, for alarm correlation, and for troubleshooting assistance. A Bayesian network comprises a graphical structure where the nodes represent statistical variables from an application domain, for example a communications network event, and the arcs the influential relationships between them. The Bayesian network further comprises numerical parts, encoding the conditional probability distribution over these statistical variables, which numerical parts are displayed either in the nodes or in separate storages associated with the nodes. The conditional probability distribution encodes the probability that the variables assume their different values given the values of other variables in the Bayesian network. For example, a Bayesian network can be used to calculate the probability of an event or alarm, given the absence or presence of certain criteria, if the probability dependencies between criteria and event/alarm are assumed to be known. BNs can handle incomplete data sets, learn casual relationships and, in conjunction with statistical methods, be used to gather domain knowledge and data.

It is known how to use ontologies to drive the building of a Bayesian network, especially in the biology domain. Typically, the ontologies are used only as means of representing knowledge to facilitate the manual creation of the Bayesian network structure, as disclosed in, e.g., "Building Bayesian Networks through Ontologies" by D. Cleary and B. Danev, 2002.

PCT/EP2006/069436 relates to the creation of a communications network behaviour model from ontologies and describes a method for highly automating the creation of a Bayesian network from a set of ontologies. This is achieved by means of an algorithm that takes an ontology model describing network-related events/actions and converts said events/actions to nodes in the Bayesian network.

There are, however, problems associated with using Bayesian networks for capturing the relationships and probabilistic correlations between network events and actions which are modelled as ontologies using a semantic modelling language such as OWL.

The fact that the ontology-based network model is semantic while the network behaviour model (the Bayesian network) is non-semantic makes the two models incompatible. Therefore, the behaviour model cannot interpret the network model. When changes occur in the network, e.g. when new communications standards introduce new events/actions to the network, or when new network devices are installed in the network, the network model should preferably be updated to account for the changes. Changing/updating the ontology-based network model is pretty straight forward and simple. However, there is also a need for subsequently changing/updating the Bayesian network. Such updating of the Bayesian network is far more cumbersome and time-consuming, especially when the updating is done manually. No matter whether the Bayesian network is created manually or automatically, it has to be regenerated upon the slightest change in the network-describing model.

Furthermore, the incompatibility between the network model and the behaviour model (the Bayesian network) requires that the same information is modelled twice. Once in the modelling language with which the network model is built and once in the programming language with which the Bayesian network is built. This results in a need for duplication of information between the ontology-based network model and the Bayesian network. The nodes of the Bayesian network comprise the same information as the ontologies, i.e. the ontology classes, of the network model.

US 2006/206293 A1, by POULIN CHRISTIAN D [US], published on 14.09.2006, discloses the application of an ontological model for the estimation of the probability that a given variable is within a pre-defined range based on a set of conditional probabilities. Nevertheless, US 2006/206293 A1 lacks any reference to applying the disclosed probability ontology representations to the field of network management, more particularly network forecasting, which is the field of application of the objective technical problem solved by the distinguishing features.

There is thus a need for an improved network behaviour model allowing the system behaviour of a communications network to be captured and modelled in a simple but yet efficient way.

### SUMMARY

The present invention relates to the problem of generating network behaviour models.

This problem is addressed by the present invention by a method for enabling generation of a behaviour model for at least a part of a communications network as claimed in claim 1. The method utilizes a semantically rich ontology-based network model which comprises an ontology of which instances represent different events/actions that may occur in the network. It also utilizes probability information indicating the probabilistic correlation between said events/actions. The method comprises the step of creating, in a semantic ontology-based modelling language, a modelling entity having at least three properties of which: a first property is a reference to a first instance of said network model ontology, which first instance hence represents a first event/action; a second property is a reference to a second instance of said network model ontology, which second instance hence represents a second event/action; and a third property is a numerical value based on said probability information and representing the probability of said second event/action occurring given said first event/action.

A further object of the invention is a method for generating a behaviour model as claimed in claim 3.

The problem is further addressed by a network management arrangement as claimed in claim 4 and a network node as claimed in claim 8 , whereby both the claimed arrangement and the claimed node comprise means for storing a modelling entity for enabling generation of a behaviour model for at least a part of a communications network, which part of a communications network is modelled in a semantically rich ontology-based network model comprising an ontology of which instances represent events/actions that can occur in the network. The modelling entity is created in a semantic ontology-based modelling language and comprises at least three properties of which: a first property is a reference to a first instance of said network model ontology, which first instance hence represents a first event/action; a second property is a reference to a second instance of said network model ontology, which second instance hence represents a second event/action; and a third property is a numerical value representing the probability of said second event/action occurring given said first event/action.

Since the innovative modelling entity refers to a first and a second instance of an ontology class in the network model, which instances represent a first and a second interrelated event/action, and since the modelling entity comprises information about the probability of the second event/action occurring given the first event/action, the modelling entity according to the invention can be considered as an "intelligent arc" which, unlike an arc linking two nodes of a Bayesian network together, knows between which nodes (i.e. events/actions) it runs and the probabilistic correlation between such nodes.

The behaviour of a network entity (e.g. a network service) that is modelled using ontology classes of which instances represents events/actions related to that network entity can hence be captured using a plurality of such intelligent arcs. That is, a set of such arcs *constitutes* a behaviour model for the network, or part of network, described by the ontology-based network model.

The inventive entities which above have been compared to "intelligent arcs" should not necessarily be construed as graphical arcs (although they may be graphically represented as described in more detail in the detailed description). Instead, they should be considered as semantic modelling entities comprising the probability data, relationships and behaviour previously found in Bayesian networks. The modelling entities according to the invention will, therefore, hereinafter be called *semantic arcs.*

By enabling probability data, relationships, and behaviour found in a Bayesian Network to be modelled within a semantic arc, the ontology class instances (representing events/actions) in the network model can be referred to. Such referring eliminates the need for adding/altering any information within the ontology classes of the network model and the need for duplication of information.

Also, as said instances of the network model are referred to instead of duplicated, the behaviour model according to the invention allows independent development, extension and use of the semantic arcs and the network model. In addition, a significant benefit of this approach is that it also shifts the probability knowledge away from the ontologies of the network model into the semantic arc. This could be considered as better design as the instances of the network model would not normally require additional internal parameters to represent probability.

It is possible to add and remove semantic arcs according to requirements of the behaviour model in order to reflect any changes in the sequence of network model instances (i.e. events/actions). Furthermore, the use of semantic arcs enables automatic construction of a behaviour model from the network model.

According to an aspect of the invention, the modelling entity is realized as an ontology class (Semantic Arc) in a semantic ontology-based modelling language. Both the ontologies representing events/actions in the network (i.e. the network model) and the Semantic Arc modelling entity may be created in OWL (Web Ontology Language), thereby ensuring compatibility between the network model and the behaviour model. The semantic arcs (i.e. the instances of the ontology class Semantic Arc), which together form a semantic behaviour model, can be stored in a system memory, stored as an OWL document, or converted to database storable information.

According to another aspect of the invention, an inference engine or reasoner, such as Jena (an open source Semantic Web framework for Java), can be used to reason over the behaviour model. Once the behaviour model has been generated it can be traversed and queried by the inference engine, and operations can be performed using the linked events/actions and the inherent probability data. Furthermore, an inference engine can be used to generate a probabilistic graphical model from the semantic arc instances, thereby providing a graphical behaviour model similar to a Bayesian network.

The proposed semantic behaviour model composed by a set of semantic arcs would hence enable telecommunications companies to capture probability information present in their networks using an ontology based, Bayesian network-like behaviour model. This would enable the modelling of the behaviour of events and actions, e.g. alarms, within a telecommunications network, which would allow statistical methods to calculate the outcome of some event/action given a starting reference point. This could be used to indicate potential issues and challenges that may arise in the network, and thus could be used to avoid such possible network issues.

The invention also relates to a network node control means as claimed in claim 12.

### BRIEF DESCRIPTION OF THE DRAWINGS

The present invention will become more fully understood from the detailed description provided hereinafter and the accompanying drawings, which are not necessarily to scale, and are given by way of illustration only. In addition, the use of spatial terms such as top, bottom, above, below etc. is for ease of explanation and should not be construed as structural or orientation limitations. In the different drawings, same reference numerals correspond to the same element.
Fig. 1 illustrates graphically a part of a network model modelled in OWL (Web Ontology Language).
Fig. 2 illustrates a behaviour pattern describing the paths that can occur following a given set of network events/actions.
Figs. 3A to 3C illustrate graphically one possible sequence of events/actions that can occur in the network entity whose behaviour is illustrated in Fig. 2.
Fig. 4 illustrates graphically the properties of a new semantic modelling entity, 'Semantic Arc', according to the invention.
Fig. 5 shows actual program code illustrating an exemplary way of realizing the modelling entity according to the invention in a semantic, ontology-based modelling language.
Fig. 6 illustrates a graphical representation of a behaviour model according to the invention.
Fig. 7 illustrates an exemplary embodiment of a communications network according to the invention.
Fig. 8 illustrates an exemplary embodiment of a network management arrangement according to the invention.
Fig. 9 is a flowchart illustrating a method for generating a behaviour model for a communications network according to the invention.

### DETAILED DESCRIPTION

As described above, behaviour models are representations of domains applied to monitor and manipulate cause and effect for modelled systems. This invention relates to communications network behaviour models which typically are used to monitor and manipulate the probabilistic correlation between various events and/or actions occurring in the network.

The present invention suggests how a new type of modelling entity can be used to provide such a communications network behaviour model using the inference or reasoning capabilities offered by a network-describing model which employs ontologies relying for example on Description Logics (DL) and/or Frame Logics (FL).

According to the invention, expert knowledge regarding a network domain is semantically represented in a network model based on formal ontologies. Instead of duplicating the information contained in this semantic network model to a non-semantic behaviour model, which is the standard procedure according to prior art, the inventive concept relies on a semantic modelling entity which, by referring to interrelated ontologies of the network model and knowing the probabilistic correlation between them, *becomes* a semantic behaviour model of the network.

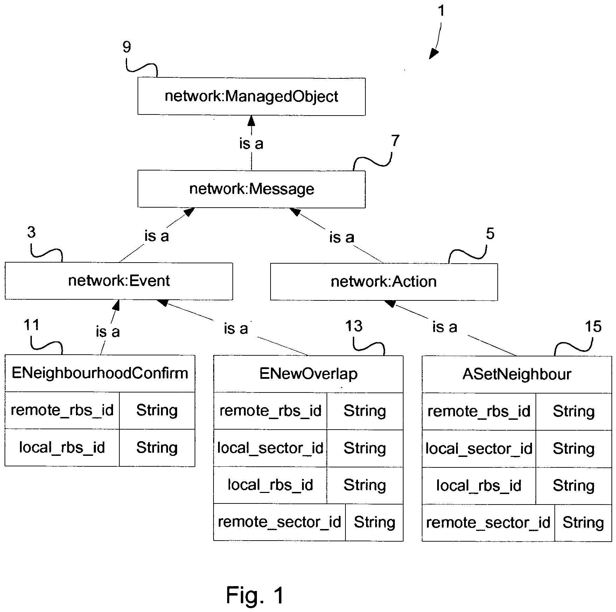

Fig. 1 illustrates graphically a part of a network model 1 modelled in OWL (Web Ontology Language) which is a modelling language based on DL supporting formal ontologies.

The graphical illustration of the partial network model 1 shows that two ontologies/ontology classes, **Event** 3 and **Action** 5, are sub-classes of an ontology class **Message** 7, which in turn is a sub-class of **ManagedObject** 9. It also depicts two sub-classes of **Event,** namely **ENeighbourhoodConfirm** 11 and **ENewOverlap** 13, as well as one sub-class of **Action**, namely **ASetNeighbour** 15. For the sub-classes, **ENeighbourhoodConfirm** 11, **ENewOverlap** 13, and **ASetNeighbour** 15, respective class properties are seen under each class name (or class ID). A person skilled in the art thus appreciates that an instance of for example the ontology class **ENeighbourhoodConfirm** 11 has two properties, one called *remote_rbs_id* and one called *local_rbs_id*, and that the values of these properties are of the datatype string.

Fig. 1 thus shows a graphical representation of an ontology-based model 1 of a part of a communications network. It should be appreciated that the invention is applicable to network models modelled in any ontology-based modelling language and, besides OWL, one example of such a modelling language is WSML (Web Service Modelling Language) which is based on FL. It should also be understood that the invention will be applicable to future modelling languages that provide a rich set of semantics as found in the least bit in today's semantic modelling languages.

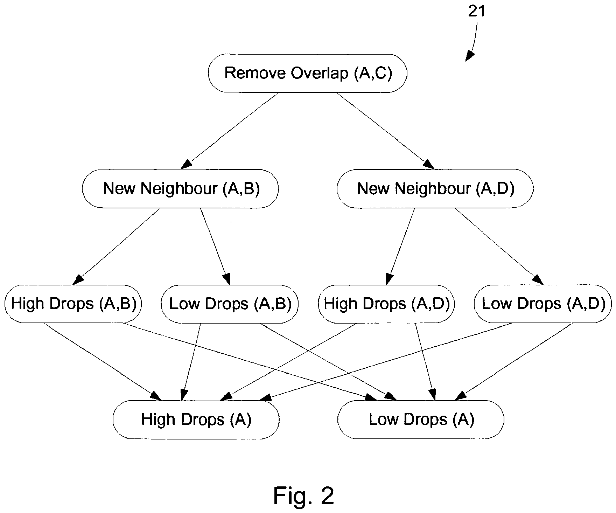

A behaviour model of a system has to be able to capture system behaviour patterns. Fig. 2 illustrates a behaviour pattern 21 which is used to describe the paths that can occur following a given set of events or actions that are found in a proposed network model, e.g., an ontology-based network model similar to the one illustrated in Fig. 1. The management task represented here is to configure new neighbours (after a network sector C has failed) between sectors of different radio base station (RBS) nodes in a way that will improve the call drops when a handover has to be carried out in the network. Links between events/actions express that there is a certain probability of the second event occurring in the network given that the former event occurred.

If the behaviour pattern 21 in Fig. 2 was based on an ontology-based network model with a structure similar to the one graphically illustrated in Fig. 1, **Remove Overlap** would be a sub-class of the ontology class **Action** 5 while **New Neighbour, High Drops** and **Low Drops** would be sub-classes of the ontology class **Event** 3.

*Remove Overlap (A*, *C)* here means that sector *A* removes overlap with sector C, which can lead to *New Neighbours (A,B)*, which means that sector A and sector B become new neighbours. That sectors A and B become new neighbours can e.g. lead to high call drops when handovers have to be carried out between sectors *A* and *B (High Drops (A,B)*), which in turn can lead to e.g. high drops in sector *A* (*High Drops (A)*).

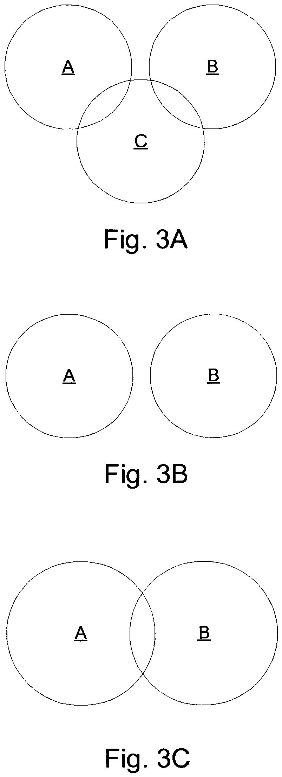

The scenario where a 'Remove Overlap' and 'New Neighbour' occur in a telecommunications network is also illustrated in Figs. 3A-C. Fig. 3A illustrates the start where all three sectors A, B and C of the telecommunications network are operational. Fig. 3B illustrates the occurrence of a Remove Overlap (A,C) action in the network, and finally, Fig. 3C illustrates the occurrence of a New Neighbour (A,B) event.

There are associated probabilities for the paths between the actions/events. For example, there may be a 90% probability that New Neighbour (A,B) will follow Remove Overlap (A,C), which would mean that New Neighbour (A,D) would have a 10% probability to occur. If the behaviour pattern illustrated in Fig. 2 was to be captured using a classical Bayesian Network (BN) representation, then the arcs that link the sets of events/actions would be devoid of any probability information. The probability information would be located either in the event/action messages (the nodes of the graph in Fig. 2) or in separate stores external to the BN (typically a table of probabilities associated with and displayed close to each node). In essence, these approaches do not allow for the probability information to be modelled within the arcs. Thus it becomes difficult for the event/action ontology classes in the ontology-based network model to retain independence from the overall behaviour model, or for the overall behaviour model to retain all relevant information within one model.

### Use Case Example

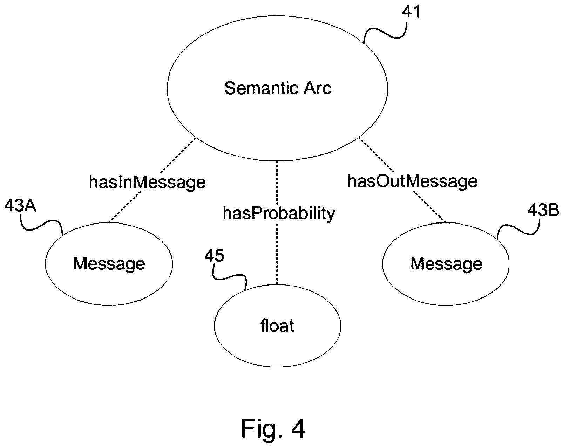

Fig. 4 illustrates graphically the properties of the new semantic modelling entity 41, 'Semantic Arc', according to the invention.

It is seen that an instance of a Semantic Arc 41 is made up of three properties. There are two object properties that link to two instances 43A and 43B of a message in an ontology. A message should in this context be interpreted as an event or action request that may occur in a communications network. In this exemplary invention use case, the behaviour model employing the new modelling entity 41 is a behaviour model of a telecommunications network modelled by means of an ontology-based network model comprising the same ontology structure as the network model illustrated in Fig. 1. Therefore, in this case, the object properties of the Semantic Arc 41 link to two different instances of the network **Message** class 7 and hence have the class type `Message'.

It should be understood that the class type of the object properties of the Semantic Arc 41 depends on the naming convention for the network model of which behaviour the behaviour model observes. That is, if for example the network model ontology modelling a notification of an event or action occurring in the network was named 'Notification' instead of `Message', the object properties of the Semantic Arc would be of the class type 'Notification'.

The 'hasInMessage' is used to state that the Semantic Arc 41 has a specific instance of a network **Message** 7 that represents an incoming message ('inMessage') 43A, and the 'hasOutMessage' is consequently used to state that the semantic arc 41 has a specific instance of a network **Message** 7 that represent an outgoing message ('outMessage') 43B.

The most basic property of the Semantic Arc 41 is a float datatype object 45, 'float', which is used to describe the probability of a particular outMessage 43B given a certain inMessage 43A. That is, an instance of the modelling entity Semantic Arc 41 has at least three properties: two object properties referring to two different instances of a network model ontology class which models events/actions that may occur in the network, and one datatype property, typically a float, representing the probability that the second event/action occurs given the first.

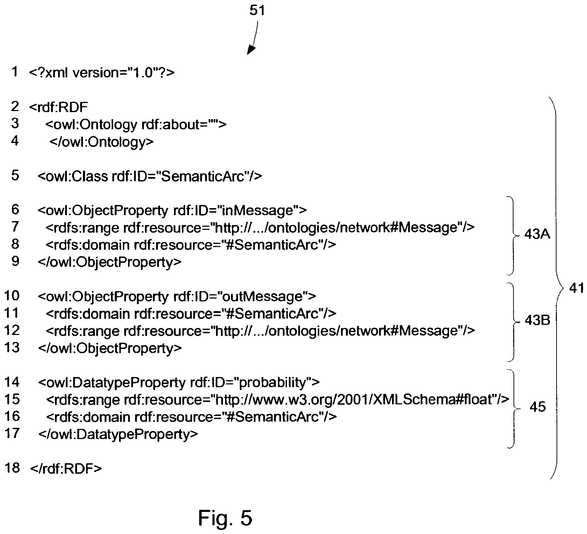

Fig. 5 shows actual program code 51, illustrating how the Semantic Arc 41 can be realized in a semantic, ontology-based modelling language. In this example, the Semantic Arc 41 is realized as an ontology class **Semantic Arc** 41 using OWL along with RDF/XML syntax. The left-hand column in Fig. 5 indicates row numbers and is not a part of the actual program code.

It is here assumed that there exists an ontology-based network model (not shown) comprising an ontology class **Message** that models a network message representing a network event or action, such as the class **Message** 7 in the graphical representation of a network model shown in Fig. 1.

It can be seen in Fig. 5 that each instance of **Semantic Arc** 41 has an 'inMessage' 43A, an 'outMessage' 43B and a 'probability' 45 in accordance with the graphical representation of a Semantic Arc 41 shown in Fig. 4. The inMessage 43A and the outMessage 43B are instances of class type 'Message'. Another more RDF influenced way to express it would be to say that the range associated with both inMessage 43A and outMessage 43B are resources of type 'Message'. As is clear from the program code 51, rows 7 and 12, the network model ontology class **Message** 7 is here assumed to be defined at the Web page http://.../ontologies/network#Message. The probability 45 is a datatype property of the Semantic Arc having the datatype float. Float is a built-in primitive datatype which, as is clear from row 15, in this example is assumed to be defined at the webpage http://www.w3.org/2001/XMLSchema#float. As also clear from the program code 51, rows 8, 11 and 16, each of the three elements of the Semantic Arc 41 (i.e. inMessage, outMessage and probability) is part of the domain 'Semantic Arc'.

It should be appreciated that the RDF/XML syntax is well-known to a person skilled in the art and need not further be described herein. For more detailed information about RDF/XML syntax, please see, e.g., the material relating thereto provided online by the World Wide Web Consortium (W3C), currently available at http://www.w3.org/RDF, http://www.w.3.org/TR/rdf-schema, http://www.w3.org/XML, and http://www.w3.org/XML/Schema (2008-04-02).

With reference now simultaneously made to Figs. 1, 4 and 5, inMessage 43A may for example represent an 'ASetNeighbour action' in the network, while outMessage 43B may indicate, e.g., an 'ENewOverlap event'. The probability 45 would in this case represent the probability that an ENewOverlap would follow an ASetNeighbour.

The behaviour of a network entity (e.g. a network service) that is modelled using ontologies representing events/actions related to that network entity can hence be captured by a plurality of semantic arcs 41 expressing the relationship between the various events/actions and their probabilistic correlations. That is, a set of instances of the suggested modelling entity Semantic Arc 41 *constitutes* a behaviour model for the network, or part of network, described by the ontology-based network model.

An inference engine or reasoner can then be used to reason over the behaviour model. The behaviour model can be traversed and queried by the inference engine, and operations can be performed using the linked events/actions and the inherent probability data. Furthermore, an inference engine can be used to generate a probabilistic graphical model from the Semantic Arc instances, thereby providing a graphical behaviour model similar to a Bayesian network. An example of such an inference engine is Jena which is an open source Java framework for building semantic web applications. Jena provides a programmatic environment for RDF, RDFS and OWL, SPARQL and includes a rule-based inference engine.

As mentioned in the background portion, a prior art technique used to capture probability data, relationships, and behaviour in and of a communications network is to generate a Bayesian network based on the ontology-based network model. This technique requires that the information found in the network model, i.e. the ontologies themselves and their probabilistic correlations, is duplicated into the behavior model since the semantic network model and the non-semantic Bayesian network are incompatible. By enabling the probability data, relationships, and behaviour previously found in such a Bayesian network to be modelled within a semantic arc 41, the ontologies representing events/actions in the network model can be referred to by the behaviour model instead of duplicated thereto.

Furthermore, since the probability data which previously had to be included as internal parameters of the ontologies in the network model now is included in the semantic arcs 41, the present invention allows for less complex network models since the ontologies can be made devoid of internal parameters.

Also, as the semantic behaviour model according to the invention speaks the same language as the semantic network model, ontology instances of the network model can be referred to by the behaviour model instead of duplicated thereto, which allows for independent development, extension and use of the behaviour model and the network model.

The behaviour model according to the invention is also more flexible than prior art behaviour models as semantic arcs 41 (i.e. instances of the modelling entity Semantic Arc 41) can be added and removed according to the requirements of the behaviour model in order to reflect any changes in the sequence of network model instances (i.e. events/actions).

Furthermore, the use of semantic arcs 41 facilitates generation of a probabilistic graphical model over the network or network domain. This is because a suitable inference engine, such as Jena, can be employed to automatically generate a graphical representation of the behaviour model since the behaviour model according to the invention is nothing but a set of instances of an ontology class, namely the ontology class **Semantic Arc** 41 illustrated in Fig. 5. Jena and several other ontology inference engines/reasoners comprise tools for graphically displaying ontologies.

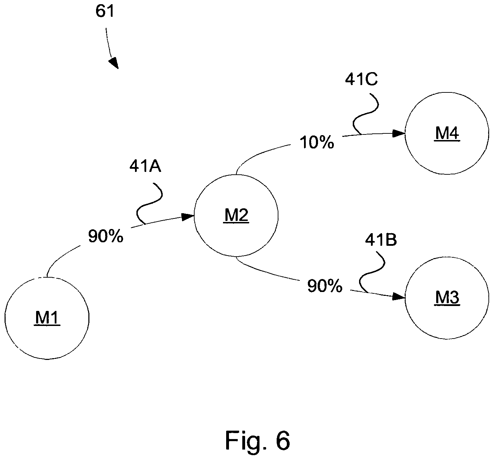

Fig. 6 illustrates such a graphical representation of a behaviour model 61 according to the invention. The behaviour model 61 comprises a set of semantic arcs 4 1 A-C, all having the properties described above with reference to Figs. 4 and 5.

Using all these properties it is possible to state that, for example, a message M2 will have a 90% probability of occurring after a message M1. It is also possible to capture the probability between message M2 and a message M3 (90%), or between message M2 and a message M4 (10%). In accordance with above, the messages M 1 to M4 are references to different instances of an ontology **Message** in an ontology-based network model, each representing an event or an action that may occur in the network. In this way it becomes possible to capture the sequence of events/actions that may occur in the network and therefore capture the overall behaviour of the network.

It is important to stress the fact that the behaviour module 61 which is realized as a probabilistic graphical model in Fig. 6 comprises nothing but three instances 41A-C of the ontology class **Semantic Arc** 41 in Fig. 5. In accordance with above, the semantic arc 41A includes two object properties; an 'inMessage' 43A and an 'outMessage' 43B which in this case are references to the **Message** class 7 instances `M1' and `M2', respectively, and one datatype property; 'probability' 45 which in this case has a value indicating that there is a 90% probability that the event/action M1 will cause the event/action M2. In the same way the semantic arcs 41B and 41C include references to the events/actions M2 and M3, and M2 and M4, respectively, and the probabilistic correlation between those events/actions.

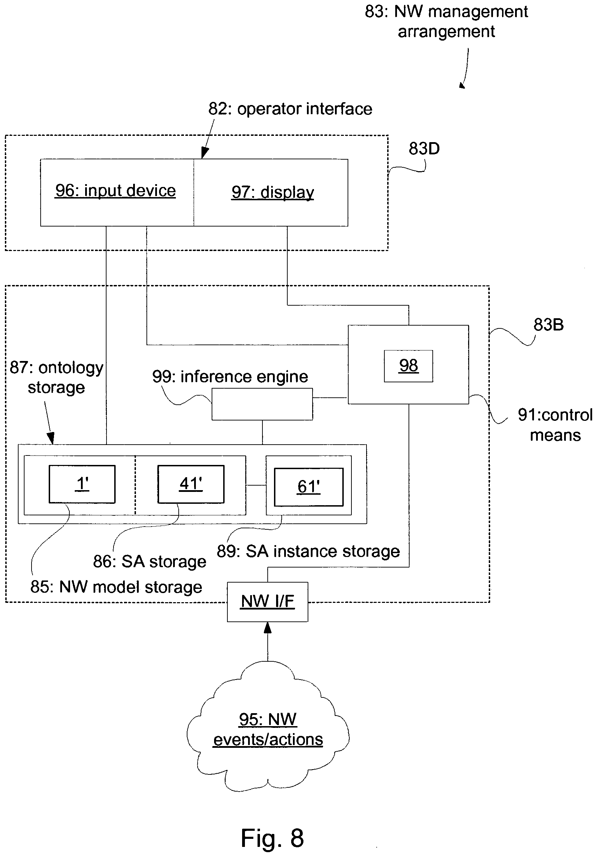

It is important to note that the probabilities of the semantic arcs 41 A-C can be updated at any time. This is typically made continuously on the basis of detected occurrences of various event/action sequences in the network. This feature will be further described below with reference to Fig. 8.

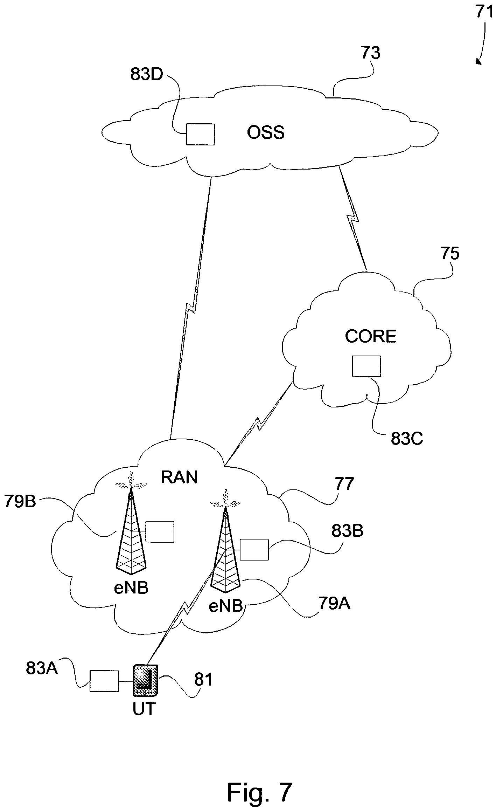

Fig. 7 illustrates a schematic view of a communications network. In this exemplary embodiment the communications network is a Long Term Evolution / System Architecture Evolution (LTE/SAE) telecommunications network 71.

The LTE/SAE network is seen to comprise an Operation Support System (OSS) 73, a core network 75, and a Radio Access Network (RAN) 77.

The OSS 73 is a domain management system supporting one or several management functions in the LTE/SAE network 71, such as fault, performance, security, and configuration functions. The OSS 73 can be seen as the network operator's entrance to the network, through which the operator can monitor and change the network configuration. The OSS 73 could also be divided into a plurality of OSS systems, each managing different parts of the network system 71. So for example may there be one core network OSS and one access network OSS for managing the core network and access network separately.

The core network 75 comprises a plurality of core network nodes which, according to the SAE architecture, may be for example SAE Gateways, Mobility Management Entity (MME) nodes, User Plane Entity (UPE) nodes etc (not shown). The RAN 77 in turn typically comprises a plurality of enhanced NodeBs (eNBs) of which two are illustrated in Fig. 7 and denoted by reference numerals 79A and 79B. The network 71 is also seen to comprise a User Terminal (UT) 81 which may be a mobile phone, a PDA or any other device equipped to connect to an eNB 79A-B of the RAN 77 in order to communicate with nodes and/or other UTs in the network 71, or other networks to which the LTE/SAE network 71 is connected. The OSS 73, the various nodes of the core 75 and access 77 networks, and the UTs 81 are communicatively connected to each other in a way that is well known in the art and need not further be described herein.

The network 71 further comprises a network management arrangement which will be described in more detail below with reference to Fig. 8. The network management arrangement comprises functionality which may or may not be distributed among the various nodes and/or UTs in the network. In this embodiment, the network management arrangement is depicted as a plurality of distributed functional modules 83A-83D residing in different parts of the network 71.

The functional modules 83-83D will now be described with reference to Fig. 8 which illustrates an exemplary embodiment of a network (NW) management arrangement 83 according to the invention. The network management arrangement 83 will be described in the context of the LTE/SAE network 71 shown in Fig. 7.

The exemplary network management arrangement 83 comprises a first module 83D residing in the OSS 73, and a second module 83B residing in an eNB 79A-B to be managed. The first module 83D comprises a network operator interface 82, typically comprising an operator input device 96 and a display 97, for allowing an operator to interact with the network management arrangement 83. The operator interface 82 may be, e.g., a conventional computer. The input device 96 allows for the operator to input a formal ontology-based network model 1' into a network model storage 85, and a formal model of a Semantic Arc 41' into a Semantic Arc (SA) modelling entity storage 86. The formal ontology-based network model 1' may be, e.g., the semantic network model 1 graphically illustrated in Fig. 1, and the formal model of a Semantic Arc 41' may be, e.g., the Semantic Arc model 41 illustrated in Fig. 5. Optionally, initial probability information related to the probabilistic correlations between various network actions/events can also be inputted through the input device 96 to set starting values/default values for the probabilities of the various Semantic Arc instances. The network operator can hence manually create initial Semantic Arc instances, each referring to two interrelated network events/actions, and assign a numeric value relating to the probabilistic correlation between the two events/actions to each of said instances. However, probability information and Semantic Arc instances are normally generated automatically as will be described in more detail below.

In this embodiment, the network model 1' and the Semantic Arc modelling entity 41' are stored in a common ontology storage 87 in the node 79A-B to be managed. It should however be understood that the network model 1' and the Semantic Arc model 41' can be stored at different locations in the network 71. The network model 1' may for example be stored in the OSS 73 while the Semantic Arc model 41' is stored in the node(s) of which behaviour is to be monitored and managed. The Semantic Arc instances 61' forming the actual behaviour model 61' of the network 71 or part of the network are stored in a Semantic Arc instance storage 89 which typically but not necessarily is located in the common ontology storage 87. In another embodiment of the invention, the storage of the formal network model 1' and the formal Semantic Arc model 41' is centralized to the first module 83D residing in the OSS 73, while only the Semantic Arc instance storage 89 is located in the second module 83B of the eNB 79A-B to be managed. The network model 1', the Semantic Arc modelling entity 41' and/or the Semantic Arc instances 61' may, e.g., be stored in the various data storages 85, 86, 87, 89 as database tables/indexes and hence for one or several ontology databases. The data storages 85, 86, 87, 89 may be any known data storage medium on which computer data may be stored, such as a memory or a hard disk. It should also be appreciated that instead of manually inputting the data forming the network model 1', the Semantic Arc modelling entity 41' and/or any initial Semantic Arc instances 61' via the operator input device 96 into the data storage(s) 85, 86, 87, 89 in an eNB 79A-B to be managed, this data may be fully or partially uploaded to from a data storage (not shown) residing in the OSS 73. The network model 1', the Semantic Arc modelling entity 41' and/or any initial Semantic Arc instances 61' may also be stored on a portable data storage medium, such as a CD-ROM or the like, and transferred into the data storage(s) 85, 86, 87, 89 of an eNB 79A-B by means of an on-site installation procedure.

When in operation, a control means 91 of the network management arrangement 83 communicates with a network interface 93 of the eNB 79A-B. The network interface 93 continuously listens to the network 71 and receives signals indicating that certain events/actions 95 have occurred in the network 71. When an event/action 95 is detected by the network interface 93, the network interface passes the information on to the control means 91 which subsequently registers all sequences of events/actions 95 that occur in the network. The control means 91 further comprises logic 98, typically implemented in form of a Java program, which can be arranged to automatically analyze the registered sequences of events/actions 95. The analysis performed by the logic 98 of the control means 91 comprises the step of determining the probabilities that certain network events/actions cause other events/actions, i.e. determining the probabilistic correlation between the registered network events/actions. A network operator can then with regular intervals make inquiries to the control means 91 through the input device 96 and have the derived probabilistic correlations presented to him at a display 97. The operator can then, using the control means 91 and an inference engine 99 which serves as an interface to the network model storage 85, the Semantic Arc model storage 86, and the Semantic Arc instances storage 89, update the probabilities of the Semantic Arc instances 61' in the Semantic Arc instance storage 89. The network management arrangement 83 also allows for the operator to add new Semantic Arc instances to the behaviour model 61' if the control means 91 has registered previously unknown interrelated events/actions 95. The control means 91 may also be arranged to automatically update the behaviour model 61' in the Semantic Arc instance storage 89 by adjusting the probability values of the respective instances, deleting unwanted instances where necessary, and also creating new instances if it has found a probabilistic correlation between two network events/actions which previously was not known to be correlated and hence did not exist as a Semantic Arc instance. It should hence be appreciated that manual generation of Semantic Arc instances is optional and that the behaviour model 61' can be entirely auto-generated by means of the control means 91 and the inference engine 99. The network node 79A-B typically comprises processing means (not shown), such as a processor, and computer program code means which, when executed by the processing means, causes the control means 91 to write information to and/or retrieve information from the data storage medium(s) 87, 85, 86, 89 storing the network model 1', the Semantic Arc modelling entity 41' and/or the Semantic Arc instances 61'

In this way, the behaviour model 61' according to the invention can always be up to date and, contrary to when prior-art behaviour models such as Bayesian networks are used, the behaviour model needs not to be regenerated each time changes occur in the observed network or network entity. Furthermore, since the probability information is kept within the semantic arcs 61' (i.e. the Semantic Arc instances), the formal network model 1' do not have to be changed or updated to get a behaviour model that actually corresponds to the behaviour of the observed network.

The network operator can, via the operator input device 96 and control means 91 use the inference engine 99 to reason over the behaviour model 61' at any time. The operator can for example make inquiries to the behaviour model about the probable outcome of a change in the network configuration and hence get support in the network management decision making process. As described above, the network management arrangement 83 also allows for the operator to ask the inference engine 99 to illustrate the behaviour model graphically by displaying it to the operator in form of a probabilistic graphical model, such as the one shown in Fig. 6.

The present invention hence provides a self-managed, distributed network management arrangement 83 enabling observation of network behaviour by generating network behaviour models in a highly automated and flexible way. The management arrangement 83 allows network operators to detect and forecast undesired network behaviour which allows for optimal management of the network.

It should be appreciated that the behaviour model according to the present invention can be used to capture the behaviour of any type of network and that the above embodiment in which the invention is used to monitor the behaviour of an LTE/SAE network system 71 is only exemplary. The network management arrangement 83 may just as well be used to monitor the behaviour of, e.g., a GSM network and the various nodes therein, such as Radio Base Stations (RBSs) and Base Station Controllers (BSCs).

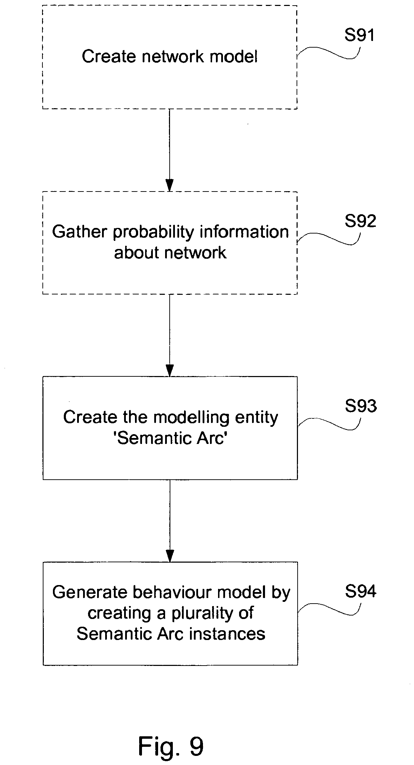

In Fig. 9 a flowchart illustrating a method for generating a behaviour model for a communications network 71 according to the invention is shown.

In a first step, S91, a semantically rich ontology-based network model 1 comprising an ontology 7 of which instances represent different events/actions that may occur in the network 71 is created. This step is known in the art and is not a part of the present invention which is why step S91 is illustrated in dashed lines. The method then proceeds to step S92.

In a second step, S92, probability information indicating the probabilistic correlation between said ontology instances, i.e. the probabilistic correlation between different events/actions that can occur in the network 71, is gathered. This information may be manually gathered based on human observations of the network 71 but may also be automatically gathered over a network interface arranged to listen continuously for events/actions occurring in the network 71, such as the network interface 89 in Fig. 8. This step is in its general form also known in the art and is not a part of the present invention which is why also step S92 is illustrated in dashed lines. The method then proceeds to step S93.

In a third step, S93, a modelling entity 41 according to the invention is created in a semantic ontology-based modelling language. As described above, the created modelling entity 41 has at least three properties of which a first property 43A is a reference to a first instance of said network model ontology 7, which first instance hence represents a first event/action; a second property 43B is a reference to a second instance of said network model ontology 7, which second instance hence represents a second event/action; and a third property 45 is a numerical value based on the probability information gathered in step S92, which value represents the probability of said second event/action occurring given said first event/action. The method then proceeds to step S94.

In a fourth step, S94, a behaviour model 61 for the network 71 is generated by creating a plurality of instances 41A-C of the modelling entity 41 that was created in step S93. Step S93 in which the modelling entity 41 is created hence enables generation of a behaviour model 61 according to the invention.

Once the semantic behaviour model has been generated in step S94 it can be traversed, queried, and operations can be performed using the links and the inherent probability data as described above in order for network operators to capture probability information present in their networks. This information can in turn be used to indicate potential issues and challenges that may arise in the network, and thus can be used to optimize network management.

Although the invention has been described with reference to specific embodiments, these descriptions are not meant to be construed in a limiting sense. Various modifications of the disclosed embodiments, as well as alternative embodiments of the invention will become apparent to persons skilled in the art upon reference to the description of the invention. The scope of the invention is set forth in the appended claims.

## Claims

1. A method for enabling generation of a behaviour model (61; 61') for at least a part of a communications network (71), which method utilizes:
- a semantically rich ontology-based network model (1; 1') comprising an ontology (7) of which instances represent different events or actions that may occur in the network; and
- probability information indicating the probabilistic correlation between said events or actions;
the method comprising the step of:
- creating (S93), in a semantic ontology-based modelling language, a modelling entity (41; 41') having at least three properties of which:
- a first property (43A) is a reference to a first instance of said network model ontology, which first instance hence represents a first event or action;
- a second property (43B) is a reference to a second instance of said network model ontology, which second instance hence represents a second event or action; and
- a third property (45) is a numerical value based on said probability information and representing the probability of said second event or action occurring given said first event or action.

2. A method according to claim 1, wherein the modelling entity (41; 41') is created in the same modelling language as the network model (1;1').

3. A method for generating a behaviour model (61; 61') for at least a part of a communications network (71), which method utilizes:
- a semantically rich ontology-based network model (1; 1') comprising an ontology (7) of which instances represent different event or actions that may occur in the network; and
- probability information indicating the probabilistic correlation between said events or actions;
the method comprising the step of:
- generating (S94) said behaviour model (61; 61') by creating a plurality of instances of a modelling entity (41; 41') which is modelled in a semantic ontology-based modelling language and has at least three properties of which:
- a first property (43A) is a reference to a first instance of said network model ontology, which first instance hence represents a first event or action;
- a second property (43B) is a reference to a second instance of said network model ontology, which second instance hence represents a second event or action; and
- a third property (45) is a numerical value based on said probability information and representing the probability of said second event or action occurring given said first event or action.

4. A network management arrangement (83) for enabling capturing, modelling and usage of information relating to the behaviour of at least a part of a communications network (71), the arrangement comprising:
- means (85) for storing a semantically rich ontology-based network model (1') comprising an ontology (7) of which instances represent events or actions that can occur in the network;
- means (86) for storing a modelling entity (41') that it is created in a semantic ontology-based modelling language and comprises at least three properties of which:
- a first property (43A) is a reference to a first instance of said network model ontology (7), which first instance hence represents a first event or action;
- a second property (43B) reference to a second instance of said network model ontology (7), which second instance hence represents a second event or action; and
- a third property (45) is a numerical value representing the probability of said second event or action occurring given said first event or action;
- means (89) for storing a behaviour model (61') made up of a set of instances of said modelling entity (41');
- control means (91) arranged to receive information from a network interface (93) and register sequences of events or actions occurring in the network (71), said control means (91) comprising logic (98) to determine the probabilistic correlation between various events or actions based on the received event or action sequences.

5. A network management arrangement (83) according to claim 4, wherein said control means (91) is arranged to update said behaviour model (60; 61') by adding and/or removing instances of said modelling entity (41') and/or updating the value of the probability property (45) for existing instances based on said determined probabilistic correlation between the events or actions in the registered sequences of events or actions.

6. A network management arrangement (83) according to claim 4 or claim 5, further comprising an operator interface (82) allowing a network operator access to the control means (91) and the determined probabilistic correlations.

7. A network management arrangement (83) according to any of the claims 4 to 6, further comprising an inference engine (99) through which a network operator can update said behaviour model (60; 61') and/or make inquiries to the behaviour model about the probable outcome of a change in the network configuration and hence get support in the network management decision making process.

8. A network node (79A-B) for use in a communications network (71), said node (79A-B) comprising means (86) for storing a modelling entity (41; 41') for enabling generation of a behaviour model (61; 61') for at least a part of a communications network (71), which part of a communications network is modelled in a semantically rich ontology-based network model (1; 1') comprising an ontology (7) of which instances represent events/actions that can occur in the network, said modelling entity (41; 41') being created in a semantic ontology-based modelling language and has at least three properties of which:
- a first property (43A) is a reference to a first instance of said network model ontology, which first instance hence represents a first event or action;
- a second property (43B) reference to a second instance of said network model ontology, which second instance hence represents a second event or action; and
- a third property (45) is a numerical value representing the probability of said second event or action occurring given said first event or action, and/or in that said node (79A-B) comprises means (89) storing a behaviour model (61; 61') comprising a set of instances of said modelling entity (41; 41').

9. A network node (79A-B) according to claim 8, further comprising means (85) storing a semantically rich ontology-based network model (1; 1') comprising an ontology (7) of which instances represent events/actions that can occur in the network.

10. A network node (79A-B) according to claim 9, further comprising control means (91) arranged to receive information from a network interface (93) and register sequences of events or actions occurring in the network (71), said control means (91) comprising logic (98) to determine the probabilistic correlation between various events/actions based on the received event/action sequences.

11. A network node (79A-B) according to claim 10, further comprising an inference engine (99) arranged to communicate on one hand, via said control means (91), with an operator interface (82), and on the other hand with said behaviour model (61; 61'), thereby allowing a network operator to update the behaviour model and/or make inquiries to the behaviour model about probable outcomes of changes in the network configuration.

12. A network node control means (91), said control means (91) being arranged to exchange information with a data storage medium (87, 86, 89) for storing a modelling entity (41; 41') for enabling generation of a behaviour model (61; 61') for at least a part of a communications network (71), which part of a communications network is modelled in a semantically rich ontology-based network model (1; 1') comprising an ontology (7) of which instances represent events or actions that can occur in the network, said modelling entity (41:41') being created in a semantic ontology-based modelling language and has at least three properties of which:
- a first property (43A) is a reference to a first instance of said network model ontology, which first instance hence represents a first event or action;
- a second property (43B) reference to a second instance of said network model ontology, which second instance hence represents a second event or action; and
- a third property (45) is a numerical value representing the probability of said second event or action occurring given said first event or action.

## Patentansprüche

1. Verfahren zum Ermöglichen der Erzeugung eines Verhaltensmodells (61; 61') für mindestens einen Teil eines Kommunikationsnetzes (71), wobei das Verfahren verwendet:
- ein semantisch reichhaltiges ontologiebasiertes Netzmodell (1; 1'), das eine Ontologie (7) umfasst, von welcher Instanzen verschiedene Ereignisse oder Aktionen darstellen, die im Netz eintreten können; und
- Wahrscheinlichkeitsinformationen, welche die probabilistische Korrelation zwischen den Ereignissen oder Aktionen anzeigen;
wobei das Verfahren die folgenden Schritte umfasst:
- Erstellen (S93) in einer semantischen ontologiebasierten Modellierungssprache einer Modellierungsentität (41; 41') mit mindestens drei Eigenschaften, von welchen:
- eine erste Eigenschaft (43A) eine Bezugnahme auf eine erste Instanz der Netzmodell-Ontologie ist, wobei die erste Instanz infolgedessen ein erstes Ereignis oder eine erste Aktion darstellt;
- eine zweite Eigenschaft (43B) eine Bezugnahme auf eine zweite Instanz der Netzmodell-Ontologie ist, wobei die zweite Instanz infolgedessen ein zweites Ereignis oder eine zweite Aktion darstellt;
- eine dritte Eigenschaft (45) ein numerischer Wert ist, der auf den Wahrscheinlichkeitsinformationen basiert und die Wahrscheinlichkeit darstellt, dass das zweite Ereignis oder die zweite Aktion in Anbetracht des ersten Ereignisses oder der ersten Aktion eintritt.

2. Verfahren nach Anspruch 1, wobei die Modellierungsentität (41; 41') in der gleichen Modellierungssprache wie das Netzmodell (1; 1') erstellt wird.

3. Verfahren zur Erzeugung eines Verhaltensmodells (61; 61') für mindestens einen Teil eines Kommunikationsnetzes (71), wobei das Verfahren verwendet:
- ein semantisch reichhaltiges ontologiebasiertes Netzmodell (1; 1'), das eine Ontologie (7) umfasst, von welcher Instanzen verschiedene Ereignisse oder Aktionen darstellen, die im Netz eintreten können; und
- Wahrscheinlichkeitsinformationen, welche die probabilistische Korrelation zwischen den Ereignissen oder Aktionen anzeigen;
wobei das Verfahren die folgenden Schritte umfasst:
- Erzeugen (S94) des Verhaltensmodells (61; 61') durch Erstellen einer Mehrzahl von Instanzen einer Modellierungsentität (41; 41'), welche in einer semantischen ontologiebasierte Modellierungssprache modelliert ist und mindestens drei Eigenschaften aufweist, von welchen:
- eine erste Eigenschaft (43A) eine Bezugnahme auf eine erste Instanz der Netzmodell-Ontologie ist, wobei die erste Instanz infolgedessen ein erstes Ereignis oder eine erste Aktion darstellt;
- eine zweite Eigenschaft (43B) eine Bezugnahme auf eine zweite Instanz der Netzmodell-Ontologie ist, wobei die zweite Instanz infolgedessen ein zweites Ereignis oder eine zweite Aktion darstellt;
- eine dritte Eigenschaft (45) ein numerischer Wert ist, der auf den Wahrscheinlichkeitsinformationen basiert und die Wahrscheinlichkeit darstellt, dass das zweite Ereignis oder die zweite Aktion in Anbetracht des ersten Ereignisses oder der ersten Aktion eintritt.

4. Netzverwaltungsanordnung (83) zum Ermöglichen des Erfassens, Modellierens und Verwendens von Informationen in Bezug auf das Verhalten mindestens eines Teils eines Kommunikationsnetzes (71), wobei die Anordnung umfasst:
- Mittel (85) zum Speichern eines semantisch reichhaltigen ontologiebasierten Netzmodells (1'), das eine Ontologie (7) umfasst, von welcher Instanzen Ereignisse oder Aktionen darstellen, die im Netz eintreten können; und
- Mittel (86) zum Speichern einer Modellierungsentität (41'), die in einer semantischen ontologiebasierten Modellierungssprache erstellt ist und mindestens drei Eigenschaften umfasst, von welchen:
- eine erste Eigenschaft (43A) eine Bezugnahme auf eine erste Instanz der Netzmodell-Ontologie (7) ist, wobei die erste Instanz infolgedessen ein erstes Ereignis oder eine erste Aktion darstellt;
- eine zweite Eigenschaft (43B) eine Bezugnahme auf eine zweite Instanz der Netzmodell-Ontologie (7) ist, wobei die zweite Instanz infolgedessen ein zweites Ereignis oder eine zweite Aktion darstellt;
- eine dritte Eigenschaft (45) ein numerischer Wert ist, der die Wahrscheinlichkeit darstellt, dass das zweite Ereignis oder die zweite Aktion in Anbetracht des ersten Ereignisses oder der ersten Aktion eintritt;
- Mittel (89) zum Speichern eines Verhaltensmodells (61'), das aus einem Satz von Instanzen der Modellierungsentität (41') besteht;
- Steuerungsmittel (91), die so ausgelegt sind, dass sie Informationen von einer Netzschnittstelle (93) empfangen und Folgen von Ereignissen oder Aktionen registrieren, die im Netz (71) eintreten, wobei die Steuerungsmittel (91) Logik (98) umfassen, um die probabilistische Korrelation zwischen verschiedenen Ereignissen oder Aktionen basierend auf den empfangenen Ereignis-oder Aktionsfolgen zu bestimmen.

5. Netzverwaltungsanordnung (83) nach Anspruch 4, wobei das Steuerungsmittel (91) so ausgelegt ist, dass es das Verhaltensmodell (60; 60') durch Hinzufügen und/oder Entfernen von Instanzen der Modellierungsentität (41') und/oder Aktualisieren des Wertes der Wahrscheinlichkeitseigenschaft (45) für bestehende Instanzen basierend auf der bestimmten probabilistischen Korrelation zwischen den Ereignissen oder Aktionen in den registrierten Folgen von Ereignissen oder Aktionen aktualisiert.

6. Netzverwaltungsanordnung (83) nach Anspruch 4 oder 5, ferner umfassend eine Betreiberschnittstelle (82), die einem Netzbetreiber Zugriff auf die Steuerungsmittel (91) und die bestimmten probabilistischen Korrelationen ermöglicht.

7. Netzverwaltungsanordnung (83) nach einem der Ansprüche 4 bis 6, ferner umfassend eine Inferenzmaschine (99), durch welche ein Netzbetreiber das Verhaltensmodell (60; 61') aktualisieren und/oder Anfragen beim Verhaltensmodell über das wahrscheinliche Ergebnis einer Änderung der Netzkonfiguration machen und infolgedessen Unterstützung im Entscheidungsfällungsprozess bei der Netzverwaltung erhalten kann.

8. Netzknoten (79A-B) zur Verwerdung in einem Kommunikationsnetz (71), wobei der Knoten (79A-B) Mittel (86) zum Speichern einer Modellierungsentität (41; 41') zum Ermöglichen der Erzeugung eines Verhaltensmodells (61; 61') für mindestens einen Teil des Kommunikationsnetzes (71) umfasst, wobei der Teil eines Kommunikationsnetzes in einem semantisch reichhaltigen ontologiebasierten Netzmodell (1; 1') modelliert ist, das eine Ontologie (7) umfasst, von welcher Instanzen Ereignisse oder Aktionen darstellen, die im Netz eintreten können, wobei die Modellierungsentität (41; 41') in einer semantischen ontologiebasierten Modellierungssprache erstellt ist und mindestens drei Eigenschaften aufweist, von welchen:
- eine erste Eigenschaft (43A) eine Bezugnahme auf eine erste Instanz der Netzmodell-Ontologie ist, wobei die erste Instanz infolgedessen ein erstes Ereignis oder eine erste Aktion darstellt;
- eine zweite Eigenschaft (43B) eine Bezugnahme auf eine zweite Instanz der Netzmodell-Ontologie ist, wobei die zweite Instanz infolgedessen ein zweites Ereignis oder eine zweite Aktion darstellt;
- eine dritte Eigenschaft (45) ein numerischer Wert ist, der die Wahrscheinlichkeit darstellt, dass das zweite Ereignis oder die zweite Aktion in Anbetracht des ersten Ereignisses oder der ersten Aktion eintritt,
und/oder der Knoten (79A-B) Mittel (89) zum Speichern eines Verhaltensmodells (61; 61') umfasst, das einen Satz von Instanzen der Modellierungsentität (41; 41') umfasst.

9. Netzknoten (79A-B) nach Anspruch 8, ferner umfassend Mittel (8) zum Speichern eines semantisch reichhaltigen ontologiebasierten Netzmodells (1; 1'), das eine Ontologie (7) umfasst, von welcher Instanzen Ereignisse oder Aktionen darstellen, die im Netz eintreten können.

10. Netzknoten (79A-B) nach Anspruch 9, ferner umfassend Steuerungsmittel (91), die so ausgelegt sind, dass sie Informationen von einer Netzschnittstelle (93) empfangen und Folgen von Ereignissen oder Aktionen registrieren, die im Netz (71) eintreten, wobei die Steuerungsmittel (91) Logik (98) umfassen, um die probabilistische Korrelation zwischen verschiedenen Ereignissen oder Aktionen basierend auf den empfangenen Ereignis- oder Aktionsfolgen zu bestimmen.

11. Netzknoten (79A-B) nach Anspruch 10, ferner umfassend eine Interferenzmaschine (99), die so ausgelegt ist, dass sie einerseits über die Steuerungsmittel (91) mit einer Betreiberschnittstelle (82) und andererseits mit dem Verhaltensmodell (61; 61') kommuniziert, um es einem Netzbetreiber dadurch zu ermöglichen, das Verhaltensmodell zu aktualisieren und/oder Anfragen beim Verhaltensmodell über wahrscheinliche Ergebnisse von Änderungen der Netzkonfiguration zu machen.

12. Netzknotensteuerungsmittel (91), wobei die Steuerungsmittel (91) so ausgelegt sind, dass sie Informationen mit einem Datenspeichermedium (87, 86, 89) zum Speichern einer Modellierungsentität (41; 41') zum Ermöglichen der Erzeugung eines Verhaltensmodells (61; 61') für mindestens einen Teil des Kommunikationsnetzes (71) austauschen, wobei der Teil eines Kommunikationsnetzes in einem semantisch reichhaltigen ontologiebasierten Netzmodell (1; 1') modelliert ist, das eine Ontologie (7) umfasst, von welcher Instanzen Ereignisse oder Aktionen darstellen, die im Netz eintreten können, wobei die Modellierungsentität (41; 41') in einer semantischen ontologiebasierten Modellierungssprache erstellt ist und mindestens drei Eigenschaften aufweist, von welchen:
- eine erste Eigenschaft (43A) eine Bezugnahme auf eine erste Instanz der Netzmodell-Ontologie ist, wobei die erste Instanz infolgedessen ein erstes Ereignis oder eine erste Aktion darstellt;
- eine zweite Eigenschaft (43B) eine Bezugnahme auf eine zweite Instanz der Netzmodell-Ontologie ist, wobei die zweite Instanz infolgedessen ein zweites Ereignis oder eine zweite Aktion darstellt;
- eine dritte Eigenschaft (45) ein numerischer Wert ist, der die Wahrscheinlichkeit darstellt, dass das zweite Ereignis oder die zweite Aktion in Anbetracht des ersten Ereignisses oder der ersten Aktion eintritt.

## Revendications

1. Procédé pour permettre la génération d'un modèle de comportement (61 ;61') pour au moins une partie d'un réseau de communication (71), lequel procédé utilise :
- un modèle de réseau basé sur ontologie sémantiquement riche (1 ; 1') comprenant une ontologie dont des instances représentent différents évènements ou actions qui peuvent se produire dans le réseau ; et
- une information de probabilité indiquant la corrélation probabilistique entre lesdits évènements ou actions ;
le procédé comprenant l'étape consistant à :
- créer (S93), dans un langage de modélisation basé sur ontologie sémantique, une entité de modélisation (41 ; 41') ayant au moins trois propriétés lesquelles
- une première propriété (43A) est une référence à une première instance de ladite ontologie de modèle de réseau, laquelle première instance représente donc un premier évènement ou action ;
- une seconde propriété (43B) est une référence à une seconde instance de ladite ontologie de modèle de réseau, laquelle seconde instance représente donc un second évènement ou action ; et
- une troisième propriété (45) est une valeur numérique basée sur ladite information de probabilité et représentant la probabilité que ledit second évènement ou action se produise étant donné ledit premier évènement ou action.

2. Procédé selon la revendication 1, dans lequel l'entité de modélisation (41 ; 41') est créée dans le même langage de modélisation que le modèle de réseau (1 ; 1').

3. Procédé de génération d'un modèle de comportement (61 ; 61') pour au moins une partie d'un réseau de communication (71), lequel procédé utilise :
- un modèle de réseau basé sur ontologie sémantiquement riche (1 ; 1') comprenant une ontologie (7) dont des instances représentent différents évènements ou actions qui peuvent se produire dans le réseau ; et
- une information de probabilité indiquant la corrélation probabilistique entre lesdits évènements ou actions ;
le procédé comprenant l'étape consistant à :
- générer (S94) ledit modèle de comportement (61 ;61') en créant une pluralité d'instances d'une entité de modélisation (41,41') qui est modélisée dans un langage de modélisation basé sur ontologie sémantique et a au moins trois propriétés desquelles :
- une première propriété (43A) est une référence à une première instance de ladite ontologie de modèle de réseau, laquelle première instance représente donc un premier évènement ou action ;
- une seconde propriété (43B) est une référence à une seconde instance de ladite ontologie de modèle de réseau, laquelle seconde instance représente donc un second évènement ou action ; et
- une troisième propriété (45) est une valeur numérique basée sur ladite information de probabilité et représentant la probabilité que ledit second évènement ou action se produise étant donné ledit premier évènement ou action.

4. Dispositif de gestion de réseau (83) pour permettre de capturer, modéliser et utiliser des informations relatives au comportement d'au moins une partie d'un réseau de communication (71), le dispositif comprenant :
- un moyen (85) pour mémoriser un modèle de réseau basé sur ontologie sémantiquement riche (1') comprenant une ontologie (7) dont des instances représentent des évènements ou actions qui peuvent se produire dans le réseau ;
- un moyen (86) pour mémoriser une entité de modélisation (41') qui est créée dans un langage de modélisation basé sur ontologie sémantique et comprend au moins trois propriétés desquelles :
- une première propriété (43A) est une référence à une première instance de ladite ontologie de modèle de réseau, laquelle première instance représente donc un premier évènement ou action ;
- une seconde propriété (43B) est une référence à une seconde instance de ladite ontologie de modèle de réseau, laquelle seconde instance représente donc un second évènement ou action ; et
- une troisième propriété (45) est une valeur numérique basée sur ladite information de probabilité et représentant la probabilité que ledit second évènement ou action se produise étant donné ledit premier évènement ou action ;
- un moyen (89) pour mémoriser un modèle de comportement (61') constitué d'un ensemble d'instances de ladite entité de modélisation (41') ;
- un moyen de commande (91) agencé pour recevoir des informations provenant d'une interface de réseau (93) et des séquences d'enregistrement d'évènements ou d'actions se produisant dans le réseau (71), ledit moyen de commande (91) comprenant une logique (98) pour déterminer la corrélation probabilistique entre divers évènements ou actions sur la base des séquences d'évènements ou d'actions reçus.

5. Dispositif de gestion de réseau (83) selon la revendication 4, dans lequel ledit moyen de commande (91) est agencé pour mettre à jour ledit modèle de comportement (60 ;61') en ajoutant et/ou supprimant des instances de ladite entité de modélisation (41') et/ou mettant à jour la valeur de la propriété de probabilité (45) pour les instances existantes sur la base de ladite corrélation probabilistique déterminée entre les évènements ou actions dans les séquences enregistrées d'évènements ou d'actions.

6. Dispositif de gestion de réseau (83) selon la revendication 4 ou 5, comprenant en outre une interface d'opérateur (82) permettant un accès d'opérateur de réseau au moyen de commande (91) et les corrélations probabilistiques déterminées.

7. Dispositif de gestion de réseau (83) selon une quelconque des revendications 4 à 6, comprenant en outre un moteur d'interférence (99) par l'intermédiaire duquel un opérateur de réseau peut mettre à jour ledit modèle de comportement (60 ;61') et/ou faire des demandes au modèle de comportement concernant le résultat probable d'un changement de configuration de réseau et donc obtenir un soutien dans le processus de prise de décision de gestion du réseau.

8. Noeud de réseau (79A-B) à utiliser dans un réseau de communication (71), ledit noeud (79A-B) comprend un moyen (86) pour mémoriser une entité de modélisation (41 ;41') pour permettre la génération d'un modèle de comportement (61 ;61') pour au moins une partie d'un réseau de communication (71), laquelle partie d'un réseau de communication est modélisée en un modèle de réseau (1 ; 1') basé sur ontologie sémantiquement riche comprenant une ontologie (7) dont des instances représentent des évènements/actions qui peuvent se produire dans le réseau, ladite entité de modélisation (41 ;41') étant créée dans un langage de modélisation basé sur ontologie sémantique et a au moins trois propriétés desquelles :
- une première propriété (43A) est une référence à une première instance de ladite ontologie de modèle de réseau, laquelle première instance représente donc un premier évènement ou action ;
- une seconde propriété (43B) est une référence à une seconde instance de ladite ontologie de modèle de réseau, laquelle seconde instance représente donc un second évènement ou action ; et
- une troisième propriété (45) est une valeur numérique basée sur ladite information de probabilité et représentant la probabilité que ledit second évènement ou action se produise étant donné ledit premier évènement ou action ;
et/ou en ce que ledit noeud (79A-B) comprend un moyen (89) pour mémoriser un modèle de comportement (61 ;61') comprenant un ensemble d'instances de ladite entité de modélisation (41 ;41').

9. Noeud de réseau (79A-B) selon la revendication 8, comprenant en outre un moyen (85) mémorisant un modèle de réseau basé sur ontologie sémantiquement riche (1 ; 1') comprenant une ontologie (7) dont des instances représentent des évènements ou actions qui peuvent se produire dans le réseau.

10. Noeud de réseau (79A-B) selon la revendication 9, comprenant en outre un moyen de commande (91) agencé pour recevoir des informations provenant d'une interface de réseau (93) et enregistrer des séquences d'évènements ou d'actions se produisant dans le réseau (71), ledit moyen de commande (91) comprenant une logique (98) pour déterminer la corrélation probabilistique entre divers évènements ou actions sur la base des séquences d'évènements/actions reçues.

11. Noeud de réseau (79A-B) selon la revendication 10, comprenant en outre un moteur d'interférence (99) agencé pour communiquer d'une part, via ledit moyen de commande (91), avec une interface d'opérateur (82), et d'autre part avec ledit modèle de comportement (61 ;61'), en permettant ainsi à un opérateur de réseau de mettre à jour le modèle de comportement et/ou faire des demandes au modèle de comportement concernant des résultats probables de changements de configuration du réseau.

12. Moyen de commande de noeud de réseau (91), ledit moyen de commande (91) étant agencé pour échanger des informations avec un support de mémorisation de données (87,88,89) mémorisant une entité de modélisation (41,41') pour permettre la génération d'un modèle de comportement (61,61')pour au moins une partie d'un réseau de communication (71), laquelle partie d'un réseau de communication est modélisée en un modèle de réseau (1 ; 1') basé sur ontologie sémantiquement riche comprenant une ontologie (7) dont des instances représentent des évènement sou actions qui peuvent se produire dans le réseau, ladite entité de modélisation (41 ;41') étant créée dans un langage de modélisation basé sur ontologie sémantique et a au moins trois propriétés desquelles :
- une première propriété (43A) est une référence à une première instance de ladite ontologie de modèle de réseau, laquelle première instance représente donc un premier évènement ou action ;
- une seconde propriété (43B) est une référence à une seconde instance de ladite ontologie de modèle de réseau, laquelle seconde instance représente donc un second évènement ou action ; et
- une troisième propriété (45) est une valeur numérique basée sur ladite information de probabilité et représentant la probabilité que ledit second évènement ou action se produise étant donné ledit premier évènement ou action.
